Europäisches Patentamt

European Patent Office

Office européen des brevets

(11) Publication number: **0 141 040**
**B1**

(12) **EUROPEAN PATENT SPECIFICATION**

(45) Date of publication of patent specification: **30.09.87**

(21) Application number: **84108208.4**

(22) Date of filing: **12.07.84**

(51) Int. Cl.⁴: **F 16 C 33/64,** F 16 C 13/02

(54) A device with a rolling bearing.

(30) Priority: **29.08.83 SE 8304653**

(43) Date of publication of application:
**15.05.85 Bulletin 85/20**

(45) Publication of the grant of the patent:
**30.09.87 Bulletin 87/40**

(84) Designated Contracting States:
**DE FR GB IT NL**

(56) References cited:
**DE-A-2 636 903
FR-A-1 600 856
GB-A-1 266 327
US-A-2 955 884
US-A-3 454 314
US-A-3 628 838
US-A-3 795 960
US-A-4 073 551**

(73) Proprietor: **SKF Nova AB
S-415 50 Göteborg (SE)**

(72) Inventor: **Lundgren, Bengt
Carin Bielkes Väg 9
S-443 00 Lerum (SE)**

(74) Representative: **Andreasson, Ralph et al
c/o Aktiebolaget SKF
S-415 50 Göteborg (SE)**

Courier Press, Leamington Spa, England.

## Description

The invention concerns a bearing device comprising a journal having an angular contact raceway for a row of rolling members, as defined in the preamble of claim 1.

In e.g. roller conveyors each roller is usually mounted on a journal in two bearings. The journal with the bearings can thereby be manufactured as described in US—A—3795960, i.e. a steel rod journal is provided with ball raceways in a rolling operation. The raceways are thereby impressed into the rod, their diameters thereby being relatively small if the rod is not prepared by providing a bulge in a separate forming operation. There are no arrangements in connection to the raceways for providing favourable sealing conditions.

The object of the present invention is to provide an improvement of the device as stated above in order to make it more suitable for use when the interior of the bearing should be effectively sealed off from the environment and the bearings should be able to take up considerable axial loads.

This object is obtained by making the device in accordance with the characterizing features stated in claim 1.

A device according to the invention is preferably used for mounting a conveyor roller in bearings. The arrangement can be made in a simple and inexpensive manner with few components, and the bearing can be effectively sealed. The journal which forms a portion of the device can be easily and quickly shaped with a high precision and the shaping operation results in an improved load-carrying capacity and strength.

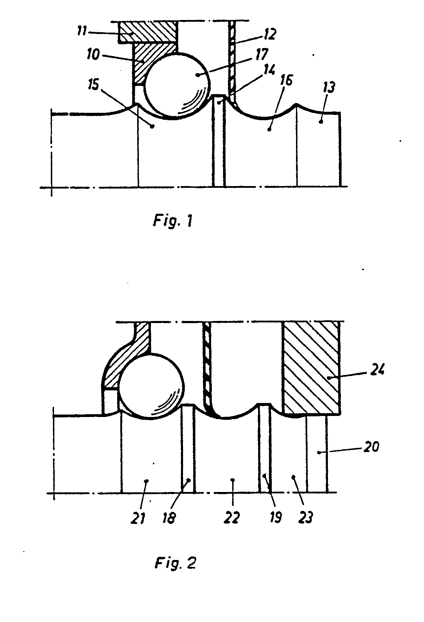

The following is a detailed description of the invention with reference to the accompanying drawings, in which figure 1 and figure 2 show axial sections of portions of two embodiments of the invention.

Figure 1 shows an embodiment of the invention in an area at one end of the journal. The area at the other end is preferably made in a corresponding way. The device comprises a conventional outer ring 10 provided in a bearing seat in a surrounding element 11. A sealing member 12 is provided outside of the bearing ring. The journal 13 is massive, and an annular protrusion 14 is formed around the journal, e.g. by pressing a number of rollers shaped with two convex annular portions against and around the journal, whereby two parallel grooves 15, 16 are formed in the journal surface. Material of the journal thereby flows together between the grooves and is pressed radially outwards, forming a flange-like portion, which makes the protrusion 14. The grooves 15, 16 constitute a raceway and a counter-surface for rolling elements 17 and a sealing member 12, respectively. By the fact that the protrusion 14 has a greater diameter than the journal the raceway in the groove 15 has a greater diameter than a raceway would have if it was made in the usual manner with cutting operations, such as turning and grinding, in the journal surface. The forming operation thus gives to the bearing an improved load-carrying capacity. The grooves made in the manner described have a surface finish which makes them suitable as raceways and as sealing surfaces for a rubbing seal without further treatment, and the forming operation results in a structure of the journal material which improves hardness and fatigue strength, whereby suitable raceways for rolling bearings are obtained.

Figure 2 shows an end portion of a device according to another embodiment of the invention. According to this embodiment there are two protrusions 18, 19 formed in a massive journal 20 by e.g. pressing with rollers forming three convex annular portions, whereby three grooves 21, 22, 23 with intermediate protrusions 18, 19 are formed in a manner corresponding to what has been described in connection to figure 1. The second protrusion can be used as an abutment for positioning the journal 20 in e.g. a roller stand 24 in which a number of conveyor rollers are arranged.

The invention is useful also in other applications than conveyor rollers, e.g. wheels and rollers for transport carriages and trucks and for mounting other rotatable objects in bearings.

## Claims

1. A bearing device comprising an outer member (10, 11), a journal (13, 20) and a row of rolling members (17) disposed betweeen the outer member and the journal, the journal being provided by a plastic forming operation with an angular contact raceway for the rolling members, the outer member also carrying a seal which engages a surface of the journal, characterised in that the journal is provided in said forming operation with first and second adjacent annular grooves (15, 16, 21, 22) separated by an annular protusion (14, 18) the diameter of which is greater than the original diameter of the journal, the first groove (15, 21) adjacent one side of the protrusion constituting said raceway and the second groove (16, 22) adjacent the other side of the protusion being contacted by said seal.

2. A device according to claim 1, in which the journal comprises two angular contact raceways for two rows of rolling members, two potions of the journal situated at a distance from one another each being provided with two grooves and an intermediate protrusion.

## Patentansprüche

Wälzlagervorrichtung bestehend aus einem Außenelement (10, 11), einer Welle (13, 20) und mindestens einer Reihe von zwischen dem Außenelement und der Welle angeordneten Wälzkörpern (17), wobei auf der Welle eine durch plastische Verformung der Welle hergestellte Schrägkontaktlaufbahn für die Wälzkörper jeder Reihe eingearbeitet ist und das Außenelement einen auf einer Mantelfläche der Welle gleitenden Dichtungsring (12) trägt, dadurch gekennzeichnet, daß auf der Mantelfläche der Welle (13, 20) mittels der plastischen Verformung eine erste Rille (15, 21), mindestens eine neben dieser angeordnete, parallel zur ersten Rille verlaufende zweite Rille (16, 22) sowie eine zwischen den beiden Rillen (15 und 16 bzw. 21 und 22) angeordnete, einen Außendurchmesser größer als der ursprüngliche Durchmesser der Welle (13, 20) aufweisende, ringförmige Erhebung (14, 18) mit einer zur ersten Rille (15, 21) weisenden Seite und einer zur der bzw. den zweiten Rille(n) (16, 22) weisenden Seite angeformt sind, wobei die Schrägkontaktlaufbahn auf der zur ersten Rille (15, 21) weisenden Seite der Erhebung (14, 18) und der Dichtungsring (12) auf der zu der bzw. den zweiten Rille(n) (16, 22) weisenden Seite, diese Seite dicht berührend, angeordnet sind.

2. Wälzlagervorrichtung nach Anspruch 1, dadurch gekennzeichnet, daß zwei Schrägkontaktlaufbahnen für je eine Reihe von Wälzkörpern (17) mit je der ersten Rille (15, 21) und der zweiten Rille (16, 22) und der dazwischen angeordneten Erhebung (14, 18) in einem gegenseitigen axialen Abstand voneinander auf der Mantelfläche der Welle (13, 20) angeformt sind.

## Revendications

1. Dispositif de roulement comprenant un élément extérieur (10, 11), un tourillon (13, 20) et une rangée de corps roulants (17) disposés entre l'élément extérieur et le tourillon, le tourillon étant muni par une opération de formage plastique d'un chemin de roulement à contact oblique pour les corps roulants, l'élément extérieur supportant aussi un joint d'étanchéité qui vient en contact avec une surface du tourillon, caractérisé en ce que le tourillon est muni, au cours de ladite opération de formage d'une première et d'une seconde gorges annulaires adjacentes (15, 16, 21, 22) séparées par une saillie annulaire (14, 18) dont le diamètre est plus grande que le diamètre initial du tourillon, la première gorge (15, 21) attenant à l'un des côtés de la saillie constituant ledit chemin de roulement et la deuxième gorge (16, 22) attenant à l'autre côté de la saillie étant en contact avec ledit joint d'étanchéité.

2. Dispositif selon revendication 1, dans laquel le tourillon comprend deux chemins à contact oblique pour deux rangées de corps roulants, deux portions du tourillon situées à une certaine distance l'une de l'autre étant munies chacune de deux gorges et d'une saillie intermédiaire.

Fig. 1

Fig. 2